(19) Europäisches Patentamt
European Patent Office
Office européen des brevets

(11) **EP 2 980 144 A1**

(12) **EUROPEAN PATENT APPLICATION**
published in accordance with Art. 153(4) EPC

(43) Date of publication:
**03.02.2016 Bulletin 2016/05**

(51) Int Cl.:
***C08J 9/18*** (2006.01)

(21) Application number: **14775840.3**

(86) International application number:
**PCT/JP2014/059212**

(22) Date of filing: **28.03.2014**

(87) International publication number:
**WO 2014/157643 (02.10.2014 Gazette 2014/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.03.2013 JP 2013072965**

(71) Applicant: **Sekisui Plastics Co., Ltd.**
**Osaka-shi,**
**Osaka 530-8565 (JP)**

(72) Inventors:
• **KOBAYASHI, Keyaki**
**Koka-shi**
**Shiga 528-0056 (JP)**
• **WATANABE, Fusao**
**Tokyo 163-0727 (JP)**
• **UGAWA, Takuji**
**Koka-shi**
**Shiga 528-0056 (JP)**

(74) Representative: **Hoffmann Eitle**
**Patent- und Rechtsanwälte PartmbB**
**Arabellastraße 30**
**81925 München (DE)**

(54) **METHOD FOR PRODUCING FOAMED PARTICLES, APPARATUS FOR PRODUCING FOAMED PARTICLES, AND FOAMED PARTICLES**

(57) A method for producing expanded particles, the method comprising dividing at least two or more times expandable particles including a base resin, which is a composite resin of a polyolefin-based resin and a polystyrene-based resin, and a blowing agent and subjecting each to an expansion step, wherein the expandable particles are subjected to the expansion step directly after being held in a pressurized vessel maintained at 0.1 to 0.4 MPa and -20 to 30°C.

EP 2 980 144 A1

**Description**

TECHNICAL FIELD

The present invention relates to a method for producing formed (expanded), an apparatus for producing formed (expanded) particles, and formed (expanded) particles. In particular, the present invention relates to a method for producing expanded particles and an apparatus for producing expanded particles that can suppress differing in the bulk expansion ratio of expanded particles for each batch of expansion when obtaining expanded particles by dividing expandable particles into two or more batches and expanding, and expanded particles for which variation in the bulk expansion ratio for each batch is suppressed.

BACKGROUND TECHNOLOGY

Expanded molded articles including a polyolefin-based resin and a polystyrene-based resin as a base resin and prepared from fused expanded particles are provided with both excellent elasticity of the polyolefin-based resin and excellent rigidity of the polystyrene-based resin, and are used as a cushioning material for vehicles and packaging.

Expanded molded articles are, for example, produced by the following method. That is, expandable particles are obtained by impregnating a blowing agent into resin particles. Next, expanded particles (pre-expanded particles) are produced by expanding (pre-expanding) the expandable particles in a reaction vessel. Furthermore, the expanded particles are filled in a mold and an expanded molded article can be obtained by expanding the expanded particles in the mold. Such method for producing an expanded molded article is normally referred to as a beads method and, for example, also disclosed in Japanese Patent No. 4072554 (Patent Document 1).

Incidentally, the production of the expandable particles and the expanded particles respectively is usually carried out by a method carrying out collectively for a given amount each time, so-called batch processing. Since the expanded particles are particles obtained by in which expanding the expandable particles at a high ratio, the volume of the expanded particles is considerably larger than that of the expandable particles. For this reason, when expanded particles are attempted to be obtained by one expansion, it is necessary for the expansion vessel used the in the production of the expanded particles to be considerably large.

However, increase in the size of the expansion vessel for the production of expanded particles is not realistic from the viewpoint of increase in production facility expenses. In addition, increase in the size of the expansion vessel is also not realistic from the viewpoint that when a large amount of expanded particles is produced all at once, deviation occurs in the number of times the expandable particles contact with steam for expansion and thus differences occur in the bulk expansion ratio of the expanded particles.

For this reason, expanded particles are normally obtained by separating multiple times (into multiple batches) the expandable particles obtained by one impregnation and expanded separately.

PRIOR ART DOCUMENTS

Patent Documents

Patent Document 1: Japanese Patent No. 4072554

SUMMARY OF THE INVENTION

PROBLEM TO BE SOLVED BY THE INVENTION

The blowing agent dissipates over time in expandable particles after impregnation of the blowing agent. For this reason, when there is a long time from after production of the expandable particles to production of the expanded particles, a difference occurs in the bulk expansion ratio between the expanded particles obtained sequentially later and the expanded particles obtained sequentially earlier. When a difference occurs, variation occurs in the physical properties of the expanded molded article produced from the expanded particles. When the base resin of the expandable particles is a composite resin of a polyolefin-based resin and a polystyrene-based resin, this variation more prominently occurs since the dissipation of the blowing agent of the polyolefin-based resin is high.

For this reason, the provision of a production method for which the aforementioned difference in the bulk expansion ratio of expanded particles does not occur has been desired.

MEANS FOR SOLVING THE PROBLEM

The inventors of the present invention have found that by subjecting to an expanding step after holding the expandable particles under a specific pressure and temperature before expansion, the occurrence of a difference in the bulk expansion ratio between the expanded particles that have been expanded sequentially earlier and the expanded particles that have been expanded sequentially later can be suppressed, thus leading to the present invention.

Thus, in accordance with the present invention, a method for producing expanded particles, the method comprising dividing at least two or more times expandable particles including a base resin, which is a composite resin of a polyolefin-based resin and a polystyrene-based resin, and a blowing agent and subjecting each to an expansion step, wherein the expandable particles are subjected to the expansion step after being held in a pressurized vessel maintained at 0.1 to 0.4 MPa and -20 to 30°C is provided.

Also, in accordance with the present invention, an apparatus for producing expanded particles used in the production of the aforementioned expanded particles, wherein the apparatus includes a pressurized vessel for holding expandable particles, an expansion vessel for expanding expandable particles, and a means for conveying expandable particles from the pressurized vessel to the expansion vessel, and the pressurized vessel includes a means for maintaining the internal pressure and the internal temperature at 0.1 to 0.4 MPa and -20 to 30°C is provided.

Furthermore, in accordance with the present invention, expanded particles obtained by the aforementioned method, wherein variation in the bulk expansion ratio between expanded particles obtained in different expansion steps is suppressed to within 3.0 are provided.

EFFECTS OF THE INVENTION

In accordance with the present invention, a method and an apparatus for producing expanded particles that can suppress differing in the bulk expansion ratio of expanded particles for each batch of expansion can be provided. Furthermore, expanded particles in which variation in the bulk expansion ratio for each batch is suppressed can be provided. Also, in accordance with the present invention, in the method for producing expanded particles by dividing expandable particles at least two or more times and subjecting separately to an expansion step, by providing at least either:

(1) the expandable particles are held in a pressurized vessel filled with an atmosphere gas including nitrogen or butane; or
(2) the expandable particles are held in the pressured vessel between 5 to 720 minutes, a method for producing expanded particles that can further suppress the difference in the bulk expansion ratio of expanded particles for each batch of expansion can be provided.

BEST MODE FOR CARRYING OUT THE INVENTION

(A) Production Method of Expanded Particles

(Production Conditions)

In the present invention, when producing expanded particles by dividing expandable particles including a composite resin of a polyolefin-based resin and a polystyrene-based resin as a base resin at least two or more times and subjecting separately to an expansion step, the expandable particles are immediately subjected to the expansion step after holding the expandable particles in a pressurized vessel maintained at 0.1 to 0.4 MPa and -20 to 30°C. By holding the expandable particles under such given specific pressure and temperature, the occurrence of a difference in the bulk expansion ratio between expanded particles that have been expanded sequential earlier and expanded particles that have been expanded sequentially later can be suppressed.

The inventors consider this reason to be as follows. That is, the amount of blowing agent tends to be less by dissipation for the expandable particles subjected to expansion sequentially later compared to the expandable particles subjected to expansion sequentially earlier. Specifically, the expandable particles are stored in a vessel to which a given internal pressure has been applied until expansion. The expandable particles used for the first expansion are removed from the vessel and, when doing so, the pressure inside the vessel decreases and the blowing agent dissipates from the expandable particles in the vessel. For this reason, the blowing agent becomes considerably dissipated for the expandable particles expanded sequentially later. By holding the expandable particles in a pressurized vessel with the aforementioned conditions, the amount of dissipating blowing agent can be suppressed or, by the atmosphere gas inside the pressurized vessel being impregnated into the expandable particles, the amount of dissipated blowing agent can be trapped. As a result, variation in the bulk expansion ratio can be suppressed.

Here, as the atmosphere gas, any of the gases used as the blowing agent mentioned below can be used.

Among these, considering safety, including nitrogen is preferable and, considering suppression of variation, including butane is preferable.

The production method of the present invention, from the view point of further suppressing variation in the bulk expansion ratio, is preferably used for each expandable particles (each batch) that has passed through one impregnation step of the blowing agent. The number of times of expansion is at least two times. This number of times can be appropriately set according to the volume of the reaction vessel for expansion. The number of times for expanding expandable particles that have passed through one impregnation step of the blowing agent is preferably 2 to 200 times. The number of times can be 2 times, 50 times, 100 times, 150 times, or 200 times. The preferable number of times is 2 to 100 times. Also, the amount of expandable particles per batch is preferably 1 to 50 kg (for example, it can be 1 kg, 5 kg, 10 kg, 20 kg, 30 kg, 40 kg, or 50 kg) and is more preferably 1 to 30 kg.

The pressurized vessel is not particularly limited so long as the given pressure can be applied.

The pressure inside the pressurized vessel is 0.1 to 0.4 MPa. When less than 0.1 MPa, the effect of trapping the dissipated amount of blowing agent is insufficient and thus suppression of variation in the bulk expansion ratio may become insufficient. On the other hand, when higher than 0.4 MPa, atmosphere gas more than the dissipated amount of blowing agent becomes impregnated into the expandable particles, and thus rather the variation may increase. The pressure can be 0.1 MPa, 0.15 MPa, 0.2 MPa, 0.25 MPa, 0.3 MPa, 0.35 MPa, or 0.4 MPa. A preferable pressure is 0.15 to 0.3 MPa.

The temperature inside the pressurized vessel is -20 to 30°C. When less than - 20°C, the temperature difference with the heating temperature in the blowing step is severe, and thus there may be decrease in the physical properties and appearance inferiority by the bubble membrane of the expanded particles ripping by sudden heating. On the other hand, when higher than 30°C, it may become a cause of expansion deterioration or expansion variation by sudden gas dissipation at the time of pressure release. The temperature can be -20°C, -10°C, 0°C, 10°C, 20°C, or 30°C. A preferable temperature is 0 to 20°C.

The holding time inside the pressurized vessel corresponds to from the holding start time of the expandable particles to the time until the entire amount of expandable particles is removed, and is preferably between 5 to 720 minutes. When less than 5 minutes, variation may be able to be suppressed even without using the production method of the present invention. When longer than 720 minutes, variation may not be able to be suppressed even if the production method of the present invention is used. The holding time can be 5 minutes, 100 minutes, 200 minutes, 300 minutes, 400 minutes, 500 minutes, 600 minutes, or 720 minutes.

The expandable particles held inside the pressurized vessel are usually directly subjected to the expansion step. This directly corresponds to the time that the atmosphere gas impregnated by holding can contribute to expandability and, for example, is within 300 seconds. This time can be within 250 seconds, within 200 seconds, within 150 seconds, within 100 seconds, or within 50 seconds.

In the expansion heating step, the expanded particles can be produced using a well-known pre-expansion method. Giving an example of a pre-expansion method, the expanded particles can be obtained by heating expandable particles using a heating medium, such as steam, at 95 to 125°C (for example, 95°C, 100°C, 105°C, 110°C, 115°C, 120°C, or 125°C) and pre-expanding to a given bulk expansion ratio.

The bulk expansion ratio of the expanded particles is preferably 5 to 70. The bulk expansion ratio can be 5, 10, 20, 30, 40, 50, 60, or 70. A more preferable bulk expansion ratio is 10 to 60.

(Composite Resin Type)

As the polyolefin-based resin, there are no particular limitations and a well-known resin can be used. Also, the polyolefin-based resin may be cross-linked. For example, polyethylene-based resins such branched low-density polyethylene, linear chain low-density polyethylene, medium-density polyethylene, high-density polyethylene, ethylene-vinyl acetate copolymers, ethylene-methyl methacrylate copolymers, and cross-linked bodies of these polymers; and polypropylene-based resins such as propylene homopolymers, ethylene-propylene random copolymers, propylene-1-butene copolymers, ethylene-propylene-butene random copolymers can be mentioned. In the aforementioned examples, the low density is preferably 0.91 to 0.94 g/cm$^3$ and more preferably 0.91 to 0.93 g/cm$^3$. The high density is preferably 0.95 to 0.97 g/cm$^3$, and more preferably 0.95 to 0.96 g/cm$^3$. The medium density is an intermediate density of these low density and high density.

As the polystyrene-based resin, polystyrene, substituted styrene polymers (the substituents include a lower alkyl, a halogen atom (in particular, a chlorine atom), or the like), copolymers of styrene as a main component and other monomers copolymerizable with styrene, and the like can be mentioned. Main component means that styrene is 70% by weight or more (for example, 70% by weight or more, 80% by weight or more, 90% by weight or more, or 100% by weight) of the entire monomer. As the substituted styrene, for example, chlorostyrenes; vinyl toluenes such as p-methyl styrene; α-methyl styrene, and the like can be mentioned. As the other monomers, in addition to substituted styrenes, acrylonitrile, methacrylonitrile, acrylic acid, methacrylic acid, acrylic acid alkyl esters, methacrylic acid alkyl esters, maleic acid mono- or dialkyls, divinyl benzene, mono- or di(meth)acrylic acid esters of ethylene glycol, polyethylene glycol dimethacrylate, maleic anhydride, N-phenylmaleimide, and the like are exemplified. In the exemplifications, the alkyl means an alkyl of 1 to 8 carbon atoms (for example, 1, 2, 3, 4, 5, 6, 7, or 8 carbon atoms).

The composite resin preferably includes 100 parts by weight of the polyolefin-based resin and 120 to 560 parts by weight of the polystyrene-based resin. When the content of the polystyrene-based resin is more than 560 parts by weight, the cracking resistance of the expanded molded article obtained from the expanded particles may deteriorate. On the other hand, when less than 120 parts by weight, although the cracking resistance greatly improves, stiffness may deteriorate. The content can be 120 parts by weight, 200 parts by weight, 250 parts by weight, 300 parts by weight, 400 parts by weight, 450 parts by weight, 500 parts by weight, or 560 parts by weight. The content of the polystyrene-based resin is preferably 140 to 450 parts by weight.

The composite resin may also include other resins in addition to the polyolefin-based resin and the polystyrene-based resin. As the other resins, acrylic-based resins derived from an acrylic-based monomer such as acrylonitrile, methacrylonitrile, acrylic acid, methacrylic acid, acrylic acid alkyl esters, and methacrylic acid alkyl esters can be mentioned.

(Expandable Particles)

The expandable particles can be obtained by impregnating a blowing agent into composite resin particles. The aforementioned composite resin particles can be obtained by adding a styrene-based monomer in an aqueous medium in which resin particles for seed polymerization (hereinafter, simply also referred to as seed particles) are dispersedly held, and then impregnating the styrene-based monomer into the seed particles and polymerizing.

(1) Seed Particles

The seed particles for composite resin particle production are preferably particles of the polyolefin-based resin explained in the section Composite Resin Type above. More preferably, the resins particles are particles of a polyethylene-based resin.

The seed particles can be obtained by a well-known method. For example, the seed particles can be produced by, after melt extruding a polyolefin-based resin using an extruder, granulating by cutting in water, strand cutting, or like. The seed particles can be a shape such as, for example, spherical, oval (egg-shaped), columnar, prismatic, pellet-shaped, and granular-shaped.

The seed particles may include a radical scavenger. The radical scavenger may be added to the polyolefin-based resin in advance or may be added at the same time as melt extrusion. The radical scavenger is a compound having an action of trapping radicals, such as a polymerization inhibitor (including a polymerization suppressant), a chain transfer agent, an antioxidant, a hindered amine-based light stabilizer, and is preferably a compound poorly soluble in water.

As the polymerization inhibitor, phenol-based polymerization inhibitors, nitroso-based polymerization inhibitors, aromatic amine-based polymerization inhibitors, phosphoric acid ester-based polymerization inhibitors, and thioether-based polymerization inhibitors such as t-butylhydroquinone, para-methoxyphenol, 2,4-dinitrophenol, t-butylcatechol, sec-propylcatechol, N-methyl-N-nitrosoaniline, N-nitrosophenylhydroxylamine, triphenyl phosphite, tris(nonylphenyl)phosphite, triethyl phosphite, tris(2-ethylhexyl) phosphite, tridecyl phosphite, tris(tridecyl) phosphite, diphenylmono(2-ethylhexyl) phosphite, diphenylmonodecyl phosphite, diphenylmono(tridecyl) phosphite, dilauryl hydrogen phosphite, tetraphenyl dipropylene glycol diphosphite, tetraphenyl tetra(tridecyl) pentaerythritol tetraphosphate, and the like can be exemplified.

Also, as the chain transfer agent, ß-mercaptopropionic acid 2-ethylhexyl ester, dipentaerythritol hexakis(3-mercaptopropionate), tris[(3-mercaptopropionyloxy)-ethyl] isocyanurate, and the like can exemplified.

As the antioxidant, phenol-based antioxidants, phosphorous-based antioxidants, and amine-based antioxidants such as 2,6-di-t-butyl-4-methylphenol (BHT), n-octadecyl-3-(3,5-di-t-butyl-4-hydroxyphenyl) propionate, pentaerythrityl-tetrakis[3-(3,5-di-t-butyl-4-hydroxyphenyl)propionate], 1,3,5-tris(3,5-di-tert-butyl-4-hydroxybenzyl) isocyanurate, I,3,5-trimethyl-2,4,6-tris(3,5-di-t-butyl-4-hydroxybenzyl) benzene, 3,9-bis[2-{3-(3-t-butyl-4-hydroxy-6-methylphenyl)propionyloxy}-1,1-dimethylethyl]-2,4,8,10-tetraoxaspiro[5 -5] undecane, distearylpentaerythritol diphosphite, tris(2,4-di-t-butylphenyl) phosphite, bis(2,4-di-t-butylphenyl) pentaerythritol diphosphite, tetrakis(2,4-di-t-butylphenyl) 4,4'-biphenylene diphosphonite, bis(2-t-butyl-4-methylphenyl) pentaerythritol diphosphite, 2,4,8,10-tetra-t-butyl-6-[3-(3-methyl-4-hydroxy-5-t-butylphenyl)propoxy] dibenzo[d,f][1,3,2] dioxaphosphepine, phenyl-1-napthylamine, octylated diphenylamine, 4,4-bis($\alpha,\alpha$-dimethylbenzyl) diphenylamine, N,N'-di-2-naphthyl-p-phenylenediamine, and the like can be mentioned.

As the hindered amine-based photostabilizer, bis(2,2,6,6-tetramethyl-4-piperidyl) sebacate, bis(1,2,2,6,6-pentamethyl-4-piperidyl) sebacate, bis(1,2,2,6,6)-pentamethyl-4-piperidyl)-2-(3,5-di-t-butyl-4-hydroxybenzyl)-2-n-butyl malonate, and the like can be exemplified.

As the used amount of the radical scavenger, 0.005 to 0.5 parts by weight with respect to 100 parts by weight of the seed particles is preferable. The used amount can be 0.005 parts by weight, 0.1 parts by weight, 0.2 parts by weight, 0.3 parts by weight, 0.4 parts by weight, or 0.5 parts by weight.

The seed particles may also include a foam nucleating agent such talc, calcium silicate, calcium stearate, synthetic or naturally-produced silicon dioxide, ethylene bis-stearic acid amide, or a methacrylic acid ester-based copolymer; a flame retardant such as hexabromocyclododecane or triallyl isocyanurate hexabromide; and/or the like.

(2) Composite Resin Particles

The composite resin particles are obtained by dispersing seed particles in an aqueous medium in a polymerization vessel and polymerizing while impregnating a styrene-based monomer into the seed particles. The method for producing the composite resin particles is explained below.

As the aqueous medium, water, a mixed medium of water and a water-soluble medium (for example, alcohol) can be mentioned.

A solvent (plasticizer) such as toluene, xylene, cyclohexane, ethyl acetate, dioctyl phthalate, or tetrachloroethylene may be added to the styrene-based monomer.

The used amount of the styrene-based monomer substantially corresponds to the content of the polyolefin-based resin and the polystyrene-based resin producing the expanded molded article.

Impregnation of the styrene-based monomer into the seed particles may be carried out while polymerizing or may be carried out before the start of polymerization. Of these, carrying out while polymerizing is preferable. In addition, when carrying polymerization after impregnation, it is easy for polymerization of the styrene-based monomer to occur near the surface of the seed particles and also, by the styrene-based monomer which has not been impregnated into the seed particles being homopolymerized, a large amount of fine particulated polystyrene-based resin particles may be generated.

An oil-soluble radical polymerization initiator can be used in polymerization of the styrene-based monomer. As this polymerization initiator, a polymerization initiator commonly used in the polymerization of styrene-based monomers can be used. For example, organic peroxides such as benzoyl peroxide, lauroyl peroxide, t-butylperoxy octoate, t-hexylperoxy octoate, t-butylperoxy benzoate, t-amylperoxy benzoate, t-butylperoxy pivalate, t-butylperoxy isopropyl carbonate, t-hexylperoxy isopropyl carbonate, t-butylperoxy-3,3,5-trimethyl cyclohexanoate, di-t-butylperoxy hexahydroterephthalate, 2,2-di-t-butylperoxy butane, di-t-hexyl peroxide, and dicumyl peroxide; and azo compounds such as azobisisobutyronitrile or azobisdimethylvaleronitrile can be mentioned. Furthermore, these oil-soluble radical polymerization initiators may be used alone or in combination.

As the method for adding the polymerization initiator to an aqueous medium in a polymerization vessel, various methods can be mentioned. For example:

(a) a method in which the polymerization initiator is dissolved into a styrene-based monomer in a separate vessel from the polymerization vessel, and then this styrene-based monomer is supplied to the polymerization vessel;
(b) a method in which a solution is prepared by dissolving the polymerization initiator in a portion of a styrene-based monomer and a solvent such as isoparaffin or a plasticizer, and then this solution and a given amount of a styrene-based monomer are simultaneously supplied to the polymerization vessel;
(c) a method in which a dispersion in which the polymerization initiator is dispersed in an aqueous medium is prepared, and then this dispersion and the styrene-based monomer is supplied to the polymerization vessel;

and the like can be mentioned.

The amount of the aforementioned polymerization initiator used is normally such that it is preferably added at 0.02 to 2.0% by weight of the total amount of styrene-based monomer used. The added amount can be 0.02% by weight, 0.5% by weight, 1.0% by weight, 1.5% by weight, or 2.0% by weight.

It is preferable to dissolve a water-soluble radical polymerization inhibitor in the aqueous medium. This is since the water-soluble radical polymerization inhibitor not only suppresses polymerization of the styrene-based monomer on the surface of seed particles, but also can prevent the styrene-based monomer suspended in the aqueous medium from homopolymerizing, thereby making it possible to reduce the formation of fine particles of polystyrene-based resin.

As the water-soluble radical polymerization inhibitor, 1 g or more of a polymerization inhibitor dissolved in 100 g of water can be used. For example, thiocyanic acid salts such as ammonium thiocyanate, zinc thiocyanate, sodium thiocyanate, potassium thiocyanate, and aluminum thiocyanate; nitrite salts such as sodium nitrite, potassium nitrite, ammonium nitrite, calcium nitrite, silver nitrite, strontium nitrite, cesium nitrite, barium nitrite, magnesium nitrite, lithium nitrite, and dicyclohexylammonium nitrite; water-soluble sulfur-containing organic compounds such as mercaptoethanol, monothiopropylene glycol, thioglycerol, thioglycolic acid, thiohydroacrylic acid, thiolactic acid, thiomalic acid, thioethanolamine, 1,2-dithioglycerol, and 1,3-dithioglycerol; and furthermore, ascorbic acid, sodium ascorbate, and the like can be mentioned.

As the amount of the aforementioned water-soluble radical polymerization inhibitor used, 0.001 to 0.04 parts by weight with respect to the 100 parts by weight of water in the aqueous medium is preferable. The amount used can be 0.001 parts by weight, 0.01 parts by weight, 0.015 parts by weight, 0.02 parts by weight, 0.025 parts by weight, 0.03 parts by weight, 0.035 parts by weight, or 0.04 parts by weight.

In addition, a dispersant is preferably added to the aforementioned aqueous medium. As such dispersant, for example, organic dispersants such as partially saponified polyvinyl alcohol, polyacrylic acid salts, polyvinyl pyrrolidone, carboxymethyl cellulose, and methyl cellulose; and inorganic dispersants such as magnesium pyrophosphate, calcium pyrophosphate, calcium phosphate, hydroxyapatite, calcium carbonate, magnesium phosphate, magnesium carbonate, and magnesium hydroxide can be mentioned.

In the case of using an inorganic dispersant, it is preferable to use in combination with a surfactant. As such surfactant, for example, sodium dodecyl benzenesulfonate, sodium α-olefinsulfonate, and the like can be mentioned.

Also, although there are no particular limitations on the temperature of the aqueous medium when polymerizing the styrene-based monomer in the seed particles, it is preferably within the range of -30 to +20°C of the melting point (peak value measured by the DSC method in accordance with JIS K 7121-1987) of the polyolefin-based resin used. The temperature can be -30°C, -20°C, -10°C, 0°C, +10°C, or +20°C of the melting point. More specifically, the temperature is preferably 70 to 140°C (for example, 70°C, 90°C, 120°C, and 140°C) and more preferably 80 to 130°C. Moreover, the temperature of the aqueous medium may be a constant temperature from start to completion of styrene-based monomer polymerization or may be increased incrementally. In the case of increasing the temperature of the aqueous medium, it is preferably increased at a rate of 0.1 to 2°C/minute.

Furthermore, in the case of using seed particles including a cross-linked polyolefin-based resin, crosslinking may be carried out in advance prior to impregnating with the styrene-based monomer, may be carried out during the time the styrene-based monomer is impregnated and polymerized in the seed particles, or may be carried out after having impregnated and polymerized the styrene-based monomer in the seed particles.

As the crosslinking agent used for crosslinking of the polyolefin-based resin, for example, organic peroxides such as 2,2-di-t-butyl peroxybutane, dicumyl peroxide, and 2,5-dimethyl-2,5-di-t-butyl peroxyhexane can be mentioned. In addition, the crosslinking agent may be used alone or in combination of two or more types. Also, preferably the amount of crosslinking agent used is normally 0.05 to 2.0 parts by weight with respect to 100 parts by weight of the seed particles.

As the method for adding the crosslinking agent, for example, a method of adding the crosslinking agent directly to the seed particles, a method of adding after dissolving the crosslinking agent in a solvent, a plasticizer or a styrene-based monomer, a method of adding after dispersing the crosslinking agent in water, and the like can be mentioned. Among these, the method of adding after dissolving the crosslinking agent in a styrene-based monomer is preferable.

The composite resin particles are obtained by the aforementioned method.

(3) Impregnation of Blowing Agent

The expandable particles can be obtained by a method in which a blowing agent is impregnated into the composite resin particles in an aqueous medium (wet impregnation method) or a method in which a blowing agent is impregnated into the composite resin particles without the presence of a medium (dry impregnation method). In the case of the former, the polymerization step of the monomer when producing the composite resin particles and the impregnation step of the blowing agent may be carried out simultaneously. The impregnated amount of blowing agent directly after production of the expandable particles is preferably 6 to 12% by weight. The impregnated amount can be 6% by weight, 8% by weight, 10% by weight, or 12% by weight.

As the blowing agent, there are no particular limitations and any well-known blowing agent can be used. In particular, an organic compound that has a melting point below the softening point of the polystyrene-based resin and that is in a gas or liquid state at ambient pressure is suitable. For example, hydrocarbons such as propane, n-butane, isobutane, n-pentane, isopentane, neopentane, cyclopentane, cyclopentadiene, n-hexane, and petroleum ethers; ketones such as acetone and methylethylketone; alcohols such as methanol, ethanol, isopropyl alcohol; low boiling point ether compounds such as dimethylether, diethylether, dipropylether, methylethylether; and inorganic gases such as carbon dioxide gas, nitrogen, and ammonia. These blowing agents may be used alone or by combining two or more types.

Also, a blowing auxiliary agent or a plasticizer may be contained with the blowing agent in the expandable particles.

As the blowing auxiliary agent, aromatic organic compounds such as styrene, toluene, ethylbenzene, and xylene; cyclic aliphatic hydrocarbons such as cyclohexane and methylcyclohexane; and solvents that have a boiling point of 200°C or less at 1 atm such as ethyl acetate and butyl acetate can be mentioned. The content of the blowing auxiliary agent in the expandable particles is normally 0.1 to 2.0% by weight. Such content can be 0.1, 0.5, 1.0, 1.5, or 2.0% by weight.

As the plasticizer, diisobutyl adipate, diacetylated monolaurate, coconut oil, and the like can be mentioned.

Also, these plasticizers also have a function as a blowing auxiliary agent.

(B) Production Apparatus of Expanded Particles

In accordance with the present invention, an apparatus for producing expanded particles used when producing the aforementioned expanded particles is provided. The configuration of the production apparatus of expanded particles is not particularly limited as long as the aforementioned expanded particles can be obtained. For example, the production apparatus of expanded particles includes a pressurized vessel for holding expandable particles, an expansion vessel for expanding the expandable particles, and a means for conveying the expandable particles from the pressurized vessel to the expansion vessel.

The pressurized vessel normally has a sealable pressure-resistant structure and includes a means for keeping the internal pressure and the temperature during production of the expanded particles at 0.1 to 0.4 MPa and -20 to 30°C. By including this means, particles in which the variation in the bulk expansion ratio for each batch is suppressed can be provided.

As the means for maintaining the internal pressure, a combination of a pressure gauge and a device for feeding under pressure atmosphere gas can be mentioned. The atmosphere gas can be fed under pressure into the pressurized vessel from the device for feeding under pressure according to the measured value of the pressure gauge. Also, as the means for maintaining the internal temperature, a combination of a thermometer and a thermostat can be mentioned. The temperature is adjusted by the thermostat according to the measured value by the thermometer.

The means for conveying the expandable particles from the pressured vessel to the expansion vessel is not particularly limited. For example, a means utilizing gravity by positioning the pressurized vessel higher than the expansion vessel, a means utilizing air pressure, and the like can be mentioned.

Although the structure of the expansion vessel is not particularly limited, an introduction port of the heating medium for expanding the expandable particles is included.

The production apparatus of the expanded particles may include a means for conveying the expandable particles to the pressurized vessel, a means for conveying the expanded particles from the pressurized vessel, and/or the like, according to necessity.

(C) Expanded Particles

In accordance with the present invention, expanded particles in which variation of the bulk expansion ratio between expanded particles for each batch having a different expansion step is suppressed to within 3.0 are provided. For expanded particles having variation in the bulk expansion ratio, in order to uniformly maintain the various physical properties of the expanded molded article, it becomes necessary to adjust the production conditions of the expanded molded article according to the bulk expansion ratio of the expanded particles. Since there are cases where the production of the expanded particles and the expanded molded article are carried out at factories in different locations or carried out by different businesses, there is a large demerit in separately adjusting such conditions when producing the expanded molded article. The expanded particles of the present invention can decrease this demerit since such variation is largely suppressed.

EXAMPLES

Although the present invention is further explained below by way of examples, the present invention is not limited by these examples.

(Bulk Expansion Ratio of Expanded Particles)

A weight (a) of about 5 g of expanded particles was weighed to two decimal places. Next, the weighed expanded particles were placed in a 500 $cm^3$ measuring cylinder having a minimum memory unit of 5 $cm^3$, and a pressing tool composed of a circular resin plate having a diameter slightly smaller than the diameter of the measuring cylinder and a bar having a width of about 1.5 cm and a length of about 30 cm fixed upright to the center of the circular resin plate was abutted against the measuring cylinder so as to read a volume (b) of the expanded particles. The bulk density of the expanded particles (g/$cm^3$) was determined by the formula (a)/(b). In addition, the bulk expansion ratio was taken to be the inverse of the bulk density, in other words, the formula (b)/(a).

(Expansion Variation)

The bulk expansion ratio of the expanded particles was measured for each batch. The value obtained by subtracting the smallest bulk expansion ratio from the largest bulk expansion ratio of 20 batches was taken as the expansion variation R. R≤3.0 was evaluated as O (good) and 3.0<R was evaluated as x (inferior).

(Appearance Evaluation)

The appearance evaluation was evaluated by the cell diameter of the outermost layer of the expanded particles.
Expanded particles were divided into two and the cross section of a slice of the particle divided into two was magnified to 15 to 30 times and photographed using a scanning electron microscope (manufactured by Hitachi High-Technologies Corporation, Model: S-3000N).
The photographed images were printed on A4 paper, one image per page, and the lengths ($\mu$m) of the longer diameter and the shorter diameter of an arbitrary cell of the outermost layer of the expanded particles based on the photographed scale were measured.
The cell diameter d was calculated from the measured results by the following formula.

$$\text{Cell diameter d} = (\text{longer diameter} + \text{shorter diameter})/2 \ (\mu m)$$

The aforementioned operation was repeated at 10 points for one expanded particle and the arithmetic average of 10 expanded particles was taken as the average cell diameter D ($\mu$m).
The appearance of the expanded particles was evaluated as follows.

O (good): The average cell diameter D of the outermost layer of the expanded particles is within the range of 50 to 500 $\mu$m.
x (inferior): Particles in which the average cell diameter D of the outermost layer of the expanded particles is outside the aforementioned range are included.

Example 1

(Polyethylene-Based Resin Particles for Seed Polymerization; Production of Seed Particles)

Ethylene-vinyl acetate copolymer resin particles (manufactured by Asahi Kasei Chemicals Corporation, product name: "Suntec EF0510", melt flow rate: 1.1 g/10 minutes, density: 0. 92 g/cm$^3$, melting point: 105°C, ethylene amount: 95% by mass) were extruded with an extruder, and the obtained extrudate was cut in a stream of water to obtain roughly spherical polyethylene-based resin particles for seed polymerization of 800 $\mu$m/grain. In addition, as a cell regulator when granulating, 0.5 parts by mass of talc was added with respect to 100 parts by mass of the aforementioned polyethylene-based resin particles for seed polymerization.

(Production of Composite Resin Particles)

15 kg of the aforementioned polyethylene-based resin particles for seed polymerization was placed in a pressure-resistant vessel having an internal volume of 100 liters and equipped with a stirrer, and 40 kg of pure water, 200 g of magnesium pyrophosphate, and 7 g of sodium dodecyl benzenesulfonate were added as an aqueous medium. The mixture was stirred to suspend the particles in the aqueous medium, and the suspension was held for 10 minutes, and then the temperature was raised to 60°C to produce a water-based suspension. Next, 7 kg of styrene with 8 g of dicumyl peroxide dissolved therein was added dropwise to this suspension for 30 minutes. This was held for 30 minutes after the dropwise addition so that styrene was absorbed by the polyethylene-based resin particles. After absorption, the temperature of the suspension was raised to 130°C at a rate of 1°C/minute and polymerization was carried out at this temperature for 1 hour and 30 minutes. Thereafter, the temperature of the suspension was lowered to 90°C, and 17 kg of styrene with 78 g of benzoyl peroxide and 7.8 g of t-butyl peroxybenzoate as polymerization initiators, and 115 g of dicumyl peroxide as a crosslinking agent dissolved therein was added dropwise to this suspension over 4 hours, 120 g of ethylenebisstearic acid amide was added, and polymerization was carried out after being absorbed by the ethylene-vinyl acetate copolymer resin particles. After completion of this dropwise addition, the mixture was held at 90°C for 1 hour, then the temperature thereof was raised to 140°C at a rate of 1°C/minute, and held at this temperature for 2 hours and 30 minutes to complete the polymerization. The resulting product was then cooled to ambient temperature at a rate of 1°C/minute to obtain the composite resin particles.

(Production Method of Expandable Particles)

20 kg of the aforementioned composite resin particles were charged in a pressure-resistant sealable blender with an internal volume of 50 liters as an impregnation reaction vessel, and after sealing, the blender was rotated and 5,000 g of butane (n-butane : i-butane = 7:3, mass ratio, the same hereinafter) was fed under pressure thereinto. After raising to a temperature of 70°C and maintaining thereat for 4 hours so as to impregnate with the butane, this was then cooled to 30°C to obtain the expandable particles.

(Production Method of Expanded Particles)

Although the aforementioned expandable particles were extracted from the pressurized vessel and expansion was carried out until a given bulk expansion ratio in a batch-type pre-expander, since butane, which is the blowing agent, begins to dissipate when extracted in an open system, until charging from the pressurized vessel to the expansion vessel (batch-type pre-expander) via a measuring device was carried out in a closed system, and expansion was carried out by measuring for each batch and feeding under pressure nitrogen gas into the pressurized vessel for each measuring so that the pressure inside the pressurized vessel became a constant 0.3 MPa and the temperature inside the pressurized vessel became a constant 30°C. In addition, transfer of the particles from the pressurized vessel to the pre-expander was within 180 seconds and the time (holding time) until the twentieth time of extraction of expandable particles from the pressurized vessel was 100 minutes.

Thereby, with a charging amount of 1 kg for one batch, the expandable particles were expanded with steam in a pre-expander with an internal tube volume of 50 liters to a bulk expansion ratio 30, and expansion was repeated 20 times to obtain the expanded particles.

Example 2

Expanded particles were obtained in the same manner as Example 1 with the exception that the pressure inside the pressurized vessel became a constant 0.2 MPa by feeding under pressure nitrogen gas into the pressurized vessel and carrying out expansion.

Example 3

Expanded particles were obtained in the same manner as Example 1 with the exception that the pressure inside the pressurized vessel became a constant 0.15 MPa by feeding under pressure nitrogen gas into the pressurized vessel and carrying out expansion.

Example 4

Expanded particles were obtained in the same manner as Example 1 with the exception that the pressure inside the pressurized vessel became a constant 0.4 MPa by feeding under pressure nitrogen gas into the pressurized vessel and carrying out expansion.

Example 5

Expanded particles were obtained in the same manner as Example 1 with the exception that the pressure inside the pressurized vessel became a constant 0.3 MPa by feeding under pressure carbon dioxide gas into the pressurized vessel and carrying out expansion.

Example 6

Expanded particles were obtained in the same manner as Example 1 with the exception that the pressure inside the pressurized vessel became a constant 0.1 MPa by feeding under pressure butane gas into the pressurized vessel and carrying out expansion.

Example 7

Expanded particles were obtained in the same manner as Example 1 with the exception that the pressure inside the pressurized vessel became a constant 0.1 MPa and the temperature became of constant -20°C by feeding under pressure nitrogen gas into the pressurized vessel and carrying out expansion.

Example 8

Expanded particles were obtained in the same manner as Example 1 with the exception that the pressure inside the pressurized vessel became a constant 0.1 MPa and the temperature became of constant 0°C by feeding under pressure nitrogen gas into the pressurized vessel and carrying out expansion.

Example 9

(Production of Polyethylene-Based Resin Particles for Seed Polymerization)

Linear chain low-density polyethylene resin particles (manufactured by Japan Polyethylene Corporation, product name: "NF-444A", melt flow rate: 2.0 g/10 minutes, density: 0.912 g/cm$^3$, melting point: 121°C) were extruded with an extruder and the obtained extrudate was cut in a stream of water to obtain roughly spherical polyethylene-based resin particles for seed polymerization of 400 μg/grain. In addition, as a cell regulator when granulating, 0.5 parts by mass of talc was added with respect to 100 parts by mass of the aforementioned polyethylene-based resin particles for seed polymerization.

(Production of Composite Resin Particles)

40 kg of pure water, 200 g of magnesium pyrophosphate as a dispersant, and 20 g of sodium dodecyl benzenesulfonate as a surfactant were added to an autoclave with an internal volume of 100 liters to become an aqueous medium. 14 kg of the aforementioned polyethylene-based resin particles for seed polymerization were suspended in the aqueous medium and the suspension was stirred at a rotational frequency of 150 rpm.

A mixture including 7 kg of styrene (100 parts by mass with respect to 200 parts by mass of the polyethylene-based resin particles for seed polymerization) and 21 g of dicumyl peroxide as a polymerization initiator was added thereto, this was then left to stand for 60 minutes at a temperature of 60°C so as to impregnate the styrene into the polyethylene-based resin particles for seed polymerization. Furthermore, the temperature of the suspension was raised to 130°C and polymerized for 3 hours. Thereafter, the temperature of the suspension was lowered to 115°C, and by adding a mixture including 17 kg of styrene and 100 g of t-butyl peroxybenzoate (TBPB) as a polymerization initiator dropwise over 4 hours thereto, polymerization was carried out while the styrene was impregnated into the polyethylene-based resin particles. Thereafter, after the temperature thereof was raised to 140°C and maintained at this temperature for 2 hours so as to reduce the remaining monomer by forced polymerization, the resulting product was then cooled to obtain the composite resin particles.

(Production Method of Expandable Particles)

20 kg of the aforementioned composite resin particles were charged in a pressure-resistant sealable blender with an internal volume of 50 liters as an impregnation reaction vessel, and after sealing, the blender was rotated and 5,000 g of butane (n-butane : i-butane = 7:3, mass ratio, the same hereinafter) was fed under pressure thereinto. After raising to a temperature of 70°C and maintaining thereat for 4 hours so as to impregnate with the butane, this was then cooled to 30°C to obtain the expandable particles.

(Production Method of Expanded Particles)

Although the aforementioned expandable particles were extracted from the pressurized vessel and expansion was carried out until a given bulk expansion ratio in a batch-type pre-expander, since butane, which is the blowing agent, begins to dissipate when extracted in an open system, until charging from the pressurized vessel to the expansion vessel (batch-type pre-expander) via a measuring device was carried out in a closed system, and expansion was carried out by measuring for each batch and feeding under pressure nitrogen gas into the pressurized vessel for each measuring so that the pressure inside pressurized vessel becomes a constant 0.3 MPa and the temperature inside the pressurized vessel becomes a constant 30°C.

Thereby, with a charging amount of 1 kg for one batch, the expandable particles were expanded with steam in a pre-expander with an internal tube volume of 50 liters to a bulk expansion ratio 50 and expansion was repeated 20 times to obtain the expanded particles. In addition, transfer of the particles from the pressurized vessel to the pre-expander was within 180 seconds and the time (holding time) until the twentieth time of extraction of expandable particles from the pressurized vessel was 120 minutes.

Example 10

Expanded particles were obtained in the same manner as Example 9 with the exception that the pressure inside the pressurized vessel became a constant 0.2 MPa by feeding under pressure nitrogen gas into the pressurized vessel and carrying out expansion.

Example 11

Expanded particles were obtained in the same manner as Example 9 with the exception that the pressure inside the pressurized vessel became a constant 0.15 MPa by feeding under pressure nitrogen gas into the pressurized vessel and carrying out expansion.

Example 12

Expanded particles were obtained in the same manner as Example 9 with the exception that the pressure inside the pressurized vessel became a constant 0.4 MPa by feeding under pressure nitrogen gas into the pressurized vessel and carrying out expansion.

Example 13

Expanded particles were obtained in the same manner as Example 9 with the exception that the pressure inside the pressurized vessel became a constant 0.3 MPa by feeding under pressure carbon dioxide gas into the pressurized vessel and carrying out expansion.

Example 14

Expanded particles were obtained in the same manner as Example 9 with the exception that the pressure inside the pressurized vessel became a constant 0.1 MPa by feeding under pressure butane gas into the pressurized vessel and carrying out expansion.

Example 15

Expanded particles were obtained in the same manner as Example 9 with the exception that the pressure inside the pressurized vessel became a constant 0.1 MPa and the temperature became of constant -20°C by feeding under pressure nitrogen gas into the pressurized vessel and carrying out expansion.

Example 16

Expanded particles were obtained in the same manner as Example 9 with the exception that the pressure inside the pressurized vessel became a constant 0.1 MPa and the temperature became of constant 0°C by feeding under pressure nitrogen gas into the pressurized vessel and carrying out expansion.

Comparative Example 1

Expanded particles were obtained in the same manner as Example 1 with the exception that expansion was carried out without feeding under pressure nitrogen gas into the pressurized vessel.

Comparative Example 2

Expanded particles were obtained in the same manner as Example 1 with the exception that the pressure inside the pressurized vessel became a constant 0.05 MPa by feeding under pressure nitrogen gas into the pressurized vessel and carrying out expansion.

Comparative Example 3

Expanded particles were obtained in the same manner as Example 1 with the exception that the pressure inside the pressurized vessel became a constant 0.1 MPa and the temperature became of constant -25°C by feeding under pressure butane gas into the pressurized vessel and carrying out expansion.

Comparative Example 4

Expanded particles were obtained in the same manner as Example 1 with the exception that the pressure inside the pressurized vessel became a constant 0.2 MPa and the temperature became of constant 40°C by feeding under pressure nitrogen gas into the pressurized vessel and carrying out expansion.

Comparative Example 5

Expanded particles were obtained in the same manner as Example 1 with the exception that the pressure inside the pressurized vessel became a constant 0.45 MPa by feeding under pressure nitrogen gas into the pressurized vessel and carrying out expansion.

Comparative Example 6

Expanded particles were obtained in the same manner as Example 9 with the exception that expansion was carried out without feeding under pressure nitrogen gas into the pressurized vessel.

Comparative Example 7

Expanded particles were obtained in the same manner as Example 9 with the exception that the pressure inside the pressurized vessel became a constant 0.05 MPa by feeding under pressure nitrogen gas into the pressurized vessel and carrying out expansion.

The gas type applying pressure to the inside of the pressurized vessel, the pressurized vessel internal pressure, the bulk expansion ratio of the expanded particles for each batch, the variation in the bulk expansion ratio, the appearance evaluation, and the overall evaluation of the aforementioned examples and comparative examples are shown in Tables 1 to 3.

Table 1

| | Example | | | | | | | |
|---|---|---|---|---|---|---|---|---|
| | 1 | 2 | 3 | 4 | 5 | 6 | 7 | 8 |
| Gas Type Applying Pressure | Nitrogen | Nitrogen | Nitrogen | Nitrogen | Carbon dioxide gas | Butane | Nitrogen | Nitrogen |
| Pressurized Vessel Internal Pressure (MPa) | 0.3 | 0.2 | 0.15 | 0.4 | 0.3 | 0.1 | 0.1 | 0.1 |
| Reaction Vessel Temperature (°C) | 30 | 30 | 30 | 30 | 30 | 30 | -20 | 0 |

(continued)

| | | Example | | | | | | | |
|---|---|---|---|---|---|---|---|---|---|
| | | 1 | 2 | 3 | 4 | 5 | 6 | 7 | 8 |
| Gas Type Applying Pressure | | Nitrogen | Nitrogen | Nitrogen | Nitrogen | Carbon dioxide gas | Butane | Nitrogen | Nitrogen |
| Batch No. | 1 | 32.1 | 32.1 | 32.1 | 33.2 | 31.6 | 32.1 | 31.8 | 32.0 |
| | 2 | 32.1 | 32.1 | 32.1 | 32.7 | 32.1 | 32.1 | 32.1 | 31.9 |
| | 3 | 32.1 | 32.1 | 32.1 | 32.5 | 32.1 | 32.1 | 32.0 | 32.2 |
| | 4 | 32.1 | 32.1 | 32.1 | 32.3 | 32.2 | 32.1 | 32.1 | 32.1 |
| | 5 | 32.1 | 32.1 | 32.1 | 32.3 | 32.1 | 32.0 | 32.1 | 32.0 |
| | 6 | 32.1 | 32.1 | 32.0 | 32.2 | 32.0 | 32.0 | 32.0 | 31.8 |
| | 7 | 32.1 | 32.0 | 32.0 | 32.0 | 31.8 | 32.0 | 31.8 | 31.8 |
| | 8 | 32.1 | 32.1 | 32.0 | 32.0 | 31.7 | 32.1 | 32.0 | 31.9 |
| | 9 | 32.1 | 32.0 | 32.1 | 32.1 | 31.8 | 31.9 | 32.1 | 31.8 |
| | 10 | 32.1 | 32.1 | 31.9 | 32.1 | 32.1 | 32.1 | 32.2 | 31.9 |
| | 11 | 32.0 | 32.1 | 32.1 | 32.1 | 32.1 | 31.9 | 32.1 | 32.0 |
| | 12 | 32.1 | 32.0 | 31.8 | 32.0 | 32.0 | 32.0 | 31.9 | 31.9 |
| | 13 | 32.0 | 31.7 | 31.4 | 31.7 | 31.0 | 31.7 | 31.8 | 32.0 |
| | 14 | 31.8 | 32.1 | 31.8 | 31.6 | 31.8 | 31.8 | 31.8 | 31.7 |
| | 15 | 31.9 | 31.9 | 31.6 | 31.6 | 32.0 | 32.1 | 31.6 | 31.7 |
| | 16 | 31.7 | 32.0 | 31.2 | 31.4 | 32.0 | 31.6 | 32.0 | 31.9 |
| | 17 | 32.0 | 31.3 | 31.5 | 31.5 | 31.8 | 31.3 | 31.8 | 31.9 |
| | 18 | 31.8 | 31.7 | 30.8 | 31.1 | 31.6 | 31.6 | 32.0 | 31.7 |
| | 19 | 32.0 | 31.9 | 31.6 | 31.3 | 31.5 | 31.5 | 31.7 | 31.7 |
| | 20 | 31.2 | 31.5 | 31.1 | 31.1 | 31.3 | 31.4 | 31.5 | 31.2 |
| Variation R (R≤3.0) | | 0.9 | 0.8 | 1.3 | 2.1 | 1.2 | 0.8 | 0.7 | 1.0 |
| Appearance Evaluation | | O | O | O | O | O | O | O | O |
| Overall Evaluation | | O | O | O | O | O | O | O | O |

Table 2

| | | Example | | | | | | | |
|---|---|---|---|---|---|---|---|---|---|
| | | 9 | 10 | 11 | 12 | 13 | 14 | 15 | 16 |
| Gas Type Applying Pressure | | Nitrogen | Nitrogen | Nitrogen | Nitrogen | Carbon dioxide gas | Butane | Nitrogen | Nitrogen |
| Pressurized Vessel Internal Pressure (MPa) | | 0.3 | 0.2 | 0.15 | 0.4 | 0.3 | 0.1 | 0.1 | 0.1 |

(continued)

| | | Example | | | | | | | |
|---|---|---|---|---|---|---|---|---|---|
| | | 9 | 10 | 11 | 12 | 13 | 14 | 15 | 16 |
| Gas Type Applying Pressure | | Nitrogen | Nitrogen | Nitrogen | Nitrogen | Carbon dioxide gas | Butane | Nitrogen | Nitrogen |
| Reaction Vessel Temperature (°C) | | 30 | 30 | 30 | 30 | 30 | 30 | -20 | 0 |
| Batch No. | 1 | 51.6 | 51.6 | 51.6 | 53.2 | 52.5 | 51.6 | 51.8 | 52.1 |
| | 2 | 51.6 | 51.6 | 51.6 | 53.0 | 52.8 | 51.6 | 51.8 | 52.0 |
| | 3 | 51.6 | 51.6 | 51.6 | 53.1 | 52.2 | 51.6 | 51.7 | 52.2 |
| | 4 | 51.6 | 51.6 | 51.6 | 53.0 | 52.2 | 51.6 | 51.7 | 51.9 |
| | 5 | 51.6 | 51.6 | 51.6 | 52.9 | 52.1 | 51.5 | 51.8 | 51.8 |
| | 6 | 51.6 | 51.6 | 51.5 | 52.8 | 52.0 | 51.6 | 51.7 | 51.8 |
| | 7 | 51.6 | 51.6 | 51.5 | 52.8 | 52.0 | 51.4 | 51.7 | 51.7 |
| | 8 | 51.6 | 51.6 | 51.6 | 52.5 | 52.0 | 51.5 | 51.6 | 51.8 |
| | 9 | 51.6 | 51.5 | 51.6 | 52.3 | 51.8 | 51.6 | 51.6 | 51.7 |
| | 10 | 51.5 | 51.5 | 51.6 | 52.1 | 51.8 | 51.6 | 51.6 | 51.7 |
| | 11 | 51.5 | 51.4 | 51.2 | 52.1 | 51.7 | 51.1 | 51.5 | 51.5 |
| | 12 | 51.6 | 51.5 | 51.3 | 52.0 | 51.7 | 51.3 | 51.5 | 51.5 |
| | 13 | 51.5 | 51.6 | 51.3 | 52.0 | 51.7 | 51.2 | 51.6 | 51.4 |
| | 14 | 51.5 | 51.2 | 51.3 | 51.8 | 51.8 | 51.2 | 51.6 | 51.4 |
| | 15 | 51.6 | 51.0 | 51.3 | 51.6 | 51.7 | 51.1 | 51.4 | 51.3 |
| | 16 | 51.4 | 51.4 | 51.1 | 51.5 | 51.6 | 50.8 | 51.3 | 51.4 |
| | 17 | 51.6 | 51.0 | 51.2 | 51.5 | 51.5 | 51.5 | 51.3 | 51.4 |
| | 18 | 50.9 | 50.6 | 51.2 | 51.3 | 51.5 | 51.6 | 51.3 | 51.3 |
| | 19 | 50.8 | 51.1 | 50.5 | 51.3 | 51.5 | 51.5 | 51.3 | 51.3 |
| | 20 | 51.3 | 51.1 | 50.4 | 50.8 | 51.4 | 51.4 | 51.1 | 51.2 |
| Variation R (R≤3.0) | | 0.8 | 1.0 | 1.2 | 2.4 | 1.4 | 0.8 | 0.7 | 1.0 |
| Appearance Evaluation | | O | O | O | O | O | O | O | O |
| Overall Evaluation | | O | O | O | O | O | O | O | O |

Table 3

| | Comparative Example | | | | | | |
|---|---|---|---|---|---|---|---|
| | 1 | 2 | 3 | 4 | 5 | 6 | 7 |
| Gas Type Applying Pressure | - | Nitrogen | Butane | Nitrogen | Nitrogen | - | Nitrogen |
| Pressurized Vessel Internal Pressure (MPa) | - | 0.05 | 0.1 | 0.2 | 0.45 | - | 0.05 |
| Reaction Vessel Temperature (°C) | 30 | 30 | -25 | 40 | 30 | 30 | 30 |

(continued)

| | | Comparative Example | | | | | | |
|---|---|---|---|---|---|---|---|---|
| | | 1 | 2 | 3 | 4 | 5 | 6 | 7 |
| Batch No. | 1 | 31.9 | 32.1 | 31.8 | 32.0 | 34.2 | 51.6 | 51.6 |
| | 2 | 32.1 | 32.1 | 32.2 | 32.0 | 33.3 | 51.6 | 51.6 |
| | 3 | 32.1 | 32.1 | 32.0 | 32.2 | 33.2 | 51.6 | 51.6 |
| | 4 | 32.1 | 32.0 | 32.0 | 31.9 | 32.9 | 51.6 | 51.6 |
| | 5 | 31.9 | 31.9 | 32.0 | 31.9 | 32.7 | 51.5 | 51.6 |
| | 6 | 31.9 | 32.0 | 31.9 | 31.9 | 32.4 | 51.5 | 51.6 |
| | 7 | 31.9 | 32.0 | 31.8 | 31.8 | 32.3 | 51.2 | 51.6 |
| | 8 | 31.6 | 31.8 | 31.8 | 31.8 | 32.3 | 51.5 | 51.5 |
| | 9 | 31.2 | 31.2 | 31.8 | 31.8 | 32.3 | 51.4 | 51.6 |
| | 10 | 31.1 | 30.5 | 31.8 | 31.7 | 32.0 | 51.4 | 51.4 |
| | 11 | 29.4 | 31.9 | 31.9 | 31.8 | 32.0 | 49.3 | 51.5 |
| | 12 | 31.2 | 31.6 | 31.8 | 31.8 | 32.0 | 50.7 | 51.5 |
| | 13 | 31.0 | 31.1 | 31.6 | 31.8 | 31.8 | 48.9 | 51.0 |
| | 14 | 28.1 | 30.2 | 31.7 | 31.7 | 31.6 | 44.7 | 50.6 |
| | 15 | 23.5 | 31.7 | 31.7 | 31.8 | 31.5 | 47.4 | 50.5 |
| | 16 | 23.9 | 31.5 | 31.8 | 31.9 | 31.6 | 37.3 | 49.9 |
| | 17 | 21.8 | 31.6 | 31.7 | 31.7 | 31.7 | 46.7 | 51.6 |
| | 18 | 23.4 | 31.5 | 31.6 | 31.5 | 31.5 | 50.1 | 50.2 |
| | 19 | 24.1 | 30.2 | 31.7 | 31.0 | 31.4 | 43.0 | 50.5 |
| | 20 | 19.4 | 28.7 | 31.4 | 31.3 | 31.0 | 51.6 | 48.2 |
| Variation R (R≤3.0) | | 12,7 | 3.4 | 0.8 | 1.2 | 3.2 | 14.3 | 3.4 |
| Appearance Evaluation | | O | O | x | x | O | O | O |
| Overall Evaluation | | x | x | x | x | x | x | x |

From the examples and the comparative examples, it is understood that when expandable particles obtained by one batch are divided into multiple batches and expanded separately, variation in the bulk expansion ratio of the expanded particles between batches can be significantly suppressed by keeping the expandable particles in a pressurized vessel under a specific pressure and temperature.

**Claims**

1. A method for producing expanded particles, the method comprising dividing at least two or more times expandable particles including a base resin, which is a composite resin of a polyolefin-based resin and a polystyrene-based resin, and a blowing agent and subjecting each to an expansion step, wherein said expandable particles are subjected to said expansion step after being held in a pressurized vessel maintained at 0.1 to 0.4 MPa and -20 to 30°C.

2. The method for producing expanded particles according to claim 1, wherein said expandable particles are held in the pressurized vessel filled with an atmosphere gas including nitrogen or butane.

3. The method for producing expanded particles according to claim 1, wherein said expandable particles are held in the pressurized vessel between 5 to 720 minutes.

4. The method for producing expanded particles according to claim 1, wherein said expandable particles are obtained by one impregnation step of a blowing agent and said expansion step being carried out 2 to 200 times.

5. The method for producing expanded particles according to claim 1, wherein 1 to 50 kg of said expandable particles is subjected to the expansion step each time.

6. An apparatus for producing expanded particles used in the production of the expanded particles according to claim 1, wherein the apparatus includes a pressurized vessel for holding expandable particles, an expansion vessel for expanding expandable particles, and a means for conveying expandable particles from the pressurized vessel to the expansion vessel, and said pressurized vessel includes a means for maintaining the internal pressure and the internal temperature at 0.1 to 0.4 MPa and -20 to 30°C.

7. Expanded particles obtained by the method according to claim 1, wherein variation of a bulk expansion ratio between expanded particles obtained by different expansion steps is suppressed to within 3.0.

## INTERNATIONAL SEARCH REPORT

International application No.

PCT/JP2014/059212

### A. CLASSIFICATION OF SUBJECT MATTER
C08J9/18(2006.01)i

According to International Patent Classification (IPC) or to both national classification and IPC

### B. FIELDS SEARCHED

Minimum documentation searched (classification system followed by classification symbols)
C08J9/18

Documentation searched other than minimum documentation to the extent that such documents are included in the fields searched
| | | |
|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | JP 2010-270209 A (JSP Corp.),<br>02 December 2010 (02.12.2010),<br>paragraphs [0005], [0010], [0036], [0055],<br>[0070] to [0074], [0095]<br>(Family: none) | 7<br>1-6 |
| X<br>A | JP 2005-281595 A (Sekisui Plastics Co., Ltd.),<br>13 October 2005 (13.10.2005),<br>claim 5; paragraphs [0002], [0003], [0023],<br>[0027]<br>(Family: none) | 7<br>1-6 |
| A | JP 2010-83971 A (Sekisui Plastics Co., Ltd.),<br>15 April 2010 (15.04.2010),<br>entire text; drawings<br>(Family: none) | 1-7 |

☒ Further documents are listed in the continuation of Box C.   ☐ See patent family annex.

| | |
|---|---|
| *  Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>    17 June, 2014 (17.06.14) | Date of mailing of the international search report<br>    01 July, 2014 (01.07.14) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2014/059212

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2001-212841 A  (Kaneka Corp.),<br>07 August 2001 (07.08.2001),<br>entire text; drawings<br>(Family: none) | 1-7 |

Form PCT/ISA/210 (continuation of second sheet) (July 2009)

## REFERENCES CITED IN THE DESCRIPTION

**Patent documents cited in the description**

- JP 4072554 B